# EUROPEAN PATENT APPLICATION

(11) **EP 2 045 782 A1**
(43) Date of publication of application: **08.04.2009**
(21) Application number: 07254777.1
(22) Date of filing: 11.12.2007
(51) Int. Cl.: G07F 7/02, G07F 7/10

(54) **Electronic money card**

(30) Priority: 05.10.2007 JP 2007262171
(71) Applicant: Ariyosh, II, Isao, Tokyo (JP)
(72) Inventor: Ariyosh, II, Isao, Tokyo (JP)
(74) Representative: Bridge-Butler, Alan James

(57) **Abstract**

The present invention provides an electronic money card in which an end user of the electronic money card can print a pattern intended by the user on the front of the electronic money card to be used for promotion, advertisement, identity, commemoration and the like. The electronic money card 1 includes image information consisting of a pattern 10 intended by an end user of the electronic money card in combination of a photograph, a picture, characters, figures, symbols and the like that is put into electronic data, in which the image information is printed on one side or both sides of a raw card with a built-in IC chip used for the electronic money card.

FIG. 1
5
ABC ISSUER
OΔ□ Corp.
ZIP CODE: 000-000 #-#-##, OO MAC11I, OO CITY
8
CONTACT FOR ABC CARD
COLLECT CENTER OF OΔ□ Corp.
ZIP CODE; 000-000 #-#-##, OO MACHI, OO CITY
9
- You can repeatedly charge (deposit) this prepaid card.
- You can use this card in member stores with EOO mark.
- You can charge up to 50.000 yen in this card; up to 25.000 yen each time.
- You cannot convert this card into cash.
- If you are lost or stolen this card, we will not refund for or reissue this card.
- Do not fold this card,
- Read the articles of association carefully.

FIG. 2 (f)
#1
CONGRATULATIONS OOOOO

## Description

The present invention relates to an electronic money card in which a pattern (including a photograph, a picture, characters, figures, symbols and the like) is printed on one side or both sides of the electronic money card as desired by an end user.

In recent years, a payment system using an electronic money card becomes more common. In the system, electronic money (money information) is stored in an IC chip previously built in the electronic money card. When a user pays for a product, for example, the user makes the electronic money card touch a processing device installed in a shop. Then, the device reads the money information stored in the IC chip and reduces money for charge payment.

Such an electronic money card has an advantage of cashless payment that people do not need to bring cash with them. In this regard, the card has a similar advantage to a widespread prepaid card or credit card. However, the electronic money card is superior to the prepaid card or credit card in that it serves to easy payment within the limit stored in the IC chip, and the user can increase or decrease the amount of money accumulated in the card as many times as the user wishes since the IC chip stores the increase of electronic money by deposits by an end user. Further, the electronic money card is highly extensible since the IC chip of the electronic money card can be added with information other than electronic money, and the information can be read by a personal computer, hence a huge demand is expected in the future,

The above electronic money card has a rectangular plane of a similar size to an existing credit cord. A design shown on the front of the card is decided by an issuer or creator of the electronic money card, for example, but an end user cannot invent the design. Therefore, the electronic money card cannot be widely used for application such as promotion, advertisement, identity or commemoration.

As a conventional technique, JP Patent. Publication (Kokai) No 2001-130004 A discloses an electronic card that has a photograph of a face to authenticate an owner of the electronic card on the front of the card in order to prevent unauthorized use of the electronic card for identification of its owner However, the face photograph printed on the front of the electronic card is not an intended pattern as desired by an end user. Moreover, its application is limited to authentication of the user identity,

In view of the above circumstances, an object of the present invention is to provide an electronic money card in which an end user of the electronic money card can print a pattern (including a photograph, a picture, characters, figures, symbols and the like) intended by the user on the front of the electronic money card to be used for promotion, advertisement, identity, commemoration and the like,

To solve the above problem, an electronic money card described in claim 1 of the present invention includes image information consisting of a pattern intended by an end user of the electronic money card in combination of a photograph, a picture, characters, figures, symbols and the like that is put into electronic data, in which the image information is printed on one side or both sides of a raw card with a built-in IC chip used for the electronic money card.

As described in the above, the electronic money card according to the present invention includes image information consisting of a pattern intended by an end user of the electronic money card in combination of a photograph, a picture, characters, figures, symbols and the like that is put into electronic data, in which the image information is printed on one side or both sides of a raw card with a built-in IC chip used for the electronic money card. As such, the end user can use the electronic money card as electronic money. Additionally, as desired by the end user, the card can show information for promotion, advertisement, identity, commemoration, etc. to be widely used for commercial use or self-introduction.

Embodiments of the present invention will now be described by way of example, and with reference to the accompanying drawings, in which:
FIG. 1 (a) is a top plan view showing information provided on the front of an electronic money card according to a first embodiment of the present invention; and FIG. 1 (b) is a top plan view showing information provided on the reverse of the card; and
FIGS. 2(a) to (f) are top plan views showing various pictures printed on the reverse of the electronic money card according to the first embodiment of the present invention.

The following will describe an embodiment of the present invention with reference to the drawings.

### First Embodiment

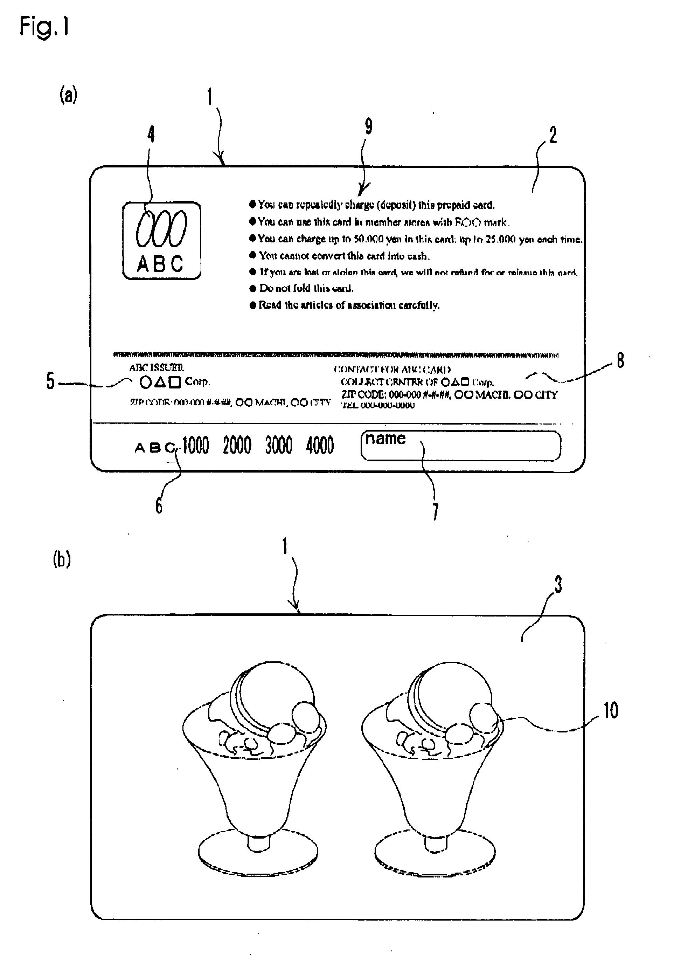

An electronic money card according to the present invention includes image information consisting of a pattern 10 intended by an end user of the electronic money card in combination of a photograph, a picture, characters, figures, symbols and the like that is put into electronic data, in which the image information is printed on one side or both sides of a raw card with a built-in IC chip (not shown) used for an electronic money card 1, as shown in FIGS. 1 (a) and (b).

Such an electronic money card will be described in detail. FIGS, 1 (a) and (b) show one example of the electronic money card 1 according to the present invention. FIG. 1 (a) shows one surface (referred to as a front 2) of the electronic money card 1, while FIG. 1 (b) shows the other surface (referred to as a reverse 3).

According to this embodiment, as shown in FIG. 1 (a), the front 2 of the electronic money card 1 shows a trademark 4 of an issuer of the card, a company name, an address or other information 5 of the issuer, an identification number 6 of the electronic money card, a name 7 of an owner of the electronic money card, contact information 8 for the electronic money card, usage considerations 9 of the electronic money card. In this manner, the front 2 of the electronic money card 1 mainly shows information of the card issuer, usage considerations, for example. However, the front 2 can also show a pattern (including a photograph, a picture, characters, figures, symbols and the like) intended by an end user.

According to this embodiment, the reverse 3 of the electronic money card 1 shows the pattern (including a photograph, a picture, characters, figures, symbols and the like) 10 intended by an end user, as shown in FIG. 1 (b), That is, the reverse 3 shows a pattern of some commemoration as desired by the end user of the electronic money card 1, or a pattern of some promotion, advertisement or the like, so that the electronic money card 1 can be used as a gift, or aggressively used for commercial use or self-introduction.

A specific method of manufacturing the electronic money card according to this embodiment is to design an intended pattern (including a photograph, a picture, characters, figures, symbols and the like) as desired by the end user. Specifically, such a pattern can be obtained by inputting image information that is digitized by reading such as a photograph desired by the end user by a scanner, or digital image information taken by a digital camera to a computer device, or by creating a digital image using image software, etc of the computer device, Then, such a digital image put into electronic data is sent to a printing device through operation of the computer device, and print processing is executed.

The above print processing can use a printer device, which conducts a print processing in a printing system such as an ink-jet printing system. At the printing, a raw card (a plain card without any print) previously embedded with an IC chip is inserted to the printing device for printing on the raw card.

The above IC chip is used for a personal card with a built-in IC (integrated circuit), a built-in recording medium such as a non-volatile rewritable memory as well as a built-in CPU (Central Processing Unit). The IC chip can input/output data to/from the outside via an optical signal or an electric signal. Therefore, in such an electronic money card, the IC chip can store decrease from previously accumulated electronic money depending on the usage amount and increase of electronic money depending on deposits by an end user. Further, the IC chip can store records of such increase or decrease of electronic money (date and time when the card is used, usage applications, expense, and the like) as information, which can be read by a personal computer.

Furthermore, the IC chip of the electronic money card can also store information about a pattern on the card printed using the above method, as desired by an end user of the electronic money card. The information recorded in the IC chip includes money information of electronic money as well as information such as promotion, advertisement, identity or commemoration, as will be described later in detail. Such information enables the electronic money card to be used for payment, as well as to be widely used for information provision such as for commercial use or self-introduction.

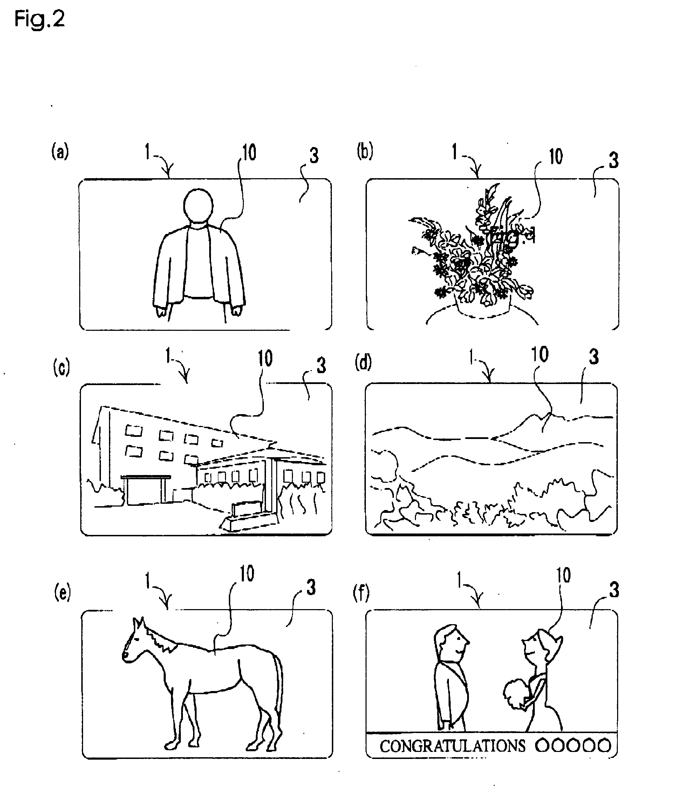

Next, with reference to FIG. 1 (b) and FIGS, 2 (a) to (f), a pattern or the like printed on the reverse 3 of the electronic money card 1 according to this embodiment will be described. The patterns shown in the drawings are only examples, but does not limit configuration of the electronic money card according to the present invention.

The pattern 10 shown in FIG. 1 (b) is one example of a menu of a restaurant. The pattern shows a menu, for example, designed as desired by a master of the restaurant, such that the electronic money card 1 can be used for advertisement of the restaurant. For this use, as information of the pattern 10 printed on the electronic money card 1, the IC chip can record the menu of the restaurant and the prices, and address of the restaurant or other information for advertisement using characters, photographs and the like. An owner of the electronic money card 1 can use the electronic money card 1 as original electronic money, as well as display information recorded in the IC chip of the electronic money card 1 on a monitor by a personal computer, or print the information on paper.

The information recorded in such an IC chip of the electronic money card 1 can be used similarly in the case of other electronic money cards according to this embodiment. Therefore, the use will not be further described in relation to the electronic money card 1 shown in FIGS. 2 (a) to (f).

The pattern 10 shown in FIG. 2 (a) is one example of a photograph of a person. The card can be used as a medium for making a photographic subject being recognized by showing a photograph of a business person on the card used as a business card, or by showing a photograph of a singer or a talent for promotion of them and by giving or selling the electronic money card 1, for example. For this use, as information of the pattern 10 printed on the electronic money card 1, the IC chip of the electronic money card 1 can record information such as a profile of the talent and introduction of an agency to which the talent belongs, as well as lyrics or scores of songs of the singer, records of an athlete, or a team to which the athlete belongs using characters and photographs.

The pattern 10 shown in FIG. 2 (b) is one example of a photograph, a painting or the like. The card can be used for advertisement such as introduction of a museum or guidance of an exhibition. For this use, the IC chip of the electronic money card 1 can record an address and a map of the museum or an exhibition site, or selections ot them using characters and photographs.

The pattern 10 shown in FIG. 2 (c) is one example of a building of a facility. The card can be used for introduction or advertisement of a hotel, a school, a hospital or the like. For this use, the IC chip of the electronic money card 1 can record an address or map of the hotel, the school or the hospital and other information using characters and photographs.

The pattern 10 shown in FIG. 2 (d) is one example of scenery of a tourist spot. The card can be used for advertisement of a travel agency. For this use, the IC chip of the electronic money card 1 can record information such as guidance of the tourist spot or advertisement of the travel agency using characters and photographs,

The pattern 10 shown in FIG. 2(e) is one example of a photograph of an animal. The card can be used for a horse owner to introduce the horse, or for a keeper to show a photograph of a pet of the keeper. For this use, the IC chip of the electronic money card 1 can record a pedigree, a birth date and other information of the animal using characters and photographs.

The pattern 10 shown in FIG. 2 (f) is one example of a photograph for some commemoration. The card can be used to show a photograph of commemoration such as marriage, birth, entrance into a school, graduation, or winning a prize. For this use, the IC chip of the electronic money card 1 can record various information of the commemoration using characters and photographs.

The electronic money card according to the present invention can be used as an original electronic money card for payment or charging. Additionally, an end user of the electronic money card can print a pattern intended by the user on the front of the electronic money card, such that the card can be used for promotion, advertisement, identity, commemoration and the like.

## Claims

1. An electronic money card (1) including image information consisting of a pattern (10) intended by an end user of the electronic money card (1) in combination of a photograph, a picture, characters, figures, symbols and the like that is put into electronic data, in which the image information is printed on one side or both sides of a raw card with a built-in IC chip used for the electronic money card (1).
